(19) Europäisches Patentamt
European Patent Office
Office européen des brevets

(11) **EP 2 163 798 B1**

(12) **EUROPEAN PATENT SPECIFICATION**

(45) Date of publication and mention
of the grant of the patent:
**13.03.2013 Bulletin 2013/11**

(51) Int Cl.:
*F16K 27/00* (2006.01)   *C08L 25/04* (2006.01)
*C08L 51/04* (2006.01)   *C08L 71/12* (2006.01)
*F16K 7/16* (2006.01)

(21) Application number: **08764822.6**

(22) Date of filing: **22.05.2008**

(86) International application number:
**PCT/JP2008/059853**

(87) International publication number:
**WO 2008/146866 (04.12.2008 Gazette 2008/49)**

(54) **VALVE**

VENTIL

SOUPAPE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.05.2007 JP 2007140752**

(43) Date of publication of application:
**17.03.2010 Bulletin 2010/11**

(73) Proprietor: **Asahi Organic Chemicals Industry Co.,
Ltd.
Nobeoka-shi,
Miyazaki 882-8688 (JP)**

(72) Inventors:
• **KOUROGI, Hidehiro
Nobeoka-shi
Miyazaki 882-8688 (JP)**
• **INOUE, Takanori
Nobeoka-shi
Miyazaki 882-8688 (JP)**

(74) Representative: **Patentanwälte
Ruff, Wilhelm, Beier, Dauster & Partner
Postfach 10 40 36
70035 Stuttgart (DE)**

(56) References cited:
**EP-A2- 0 129 762          JP-A- 8 152 073
JP-A- 02 001 760          JP-A- 11 181 195
JP-A- 11 181 195          JP-A- 2001 192 518
JP-A- 2001 220 781       JP-A- 2002 217 506
JP-A- 2006 188 628       US-A- 4 777 977
US-A1- 2007 108 056**

• **GENERAL ELECTRIC COMPANY: "AquaMatic
K530 Series Product Specifications", GE WATER
& PROCESS TECHNOLOGIES, 2006, pages 1-2,
XP002636834,**
• **GENERAL ELECTRIC COMPANY: "Autotrol 172
Series Softener, Filter Control Valves", GE
WATER & PROCESS TECHNOLOGIES, 2004,
pages 1-4, XP002636835,**
• **GE PLASTICS: "Noryl profile", PRODUCT
BROCHURE, 2001, pages 1-50, XP002636836,**

**Description**

TECHNICAL FIELD

The present invention relates to a valve which is suitably used for a pipe line through which a high-temperature fluid at 60°C or higher flows, and more particularly to a valve which can be suitably used for a high-temperature alkaline line and can be produced by using the same production facility as that of a vinyl chloride resin, and well-balanced high-temperature creep characteristics and impact strength.

BACKGROUND ART

Heretofore, there have been various resin valves, and a diaphragm valve made of a resin is proposed as one example thereof (see Patent Document 1). A vinyl chloride resin (hereinafter referred to as PVC) has been used as the material of a valve body of the diaphragm valve. A ball valve made of a resin is proposed as another example thereof (see Patent Document 2). PVC also has been used as the material of a valve body of the ball valve. Thus described, since PVC is excellent in workability and chemical resistance and the material is produced at low cost, it has been suitably used as the material of the valve body.

However, there was a problem that PVC does not suit for piping line use through which a high-temperature fluid flows, since PVC has a heat deformation temperature of about 70°C and thus a service temperature of the above conventional valve made of PVC is limited to 60°C.

In the conventional resin valves (Patent Documents 1 and 2), other resins such as a chlorinated polyvinyl chloride resin (hereinafter referred to as CPVC), polypropylene (hereinafter referred to as PP), polyvinylidene fluoride (hereinafter referred to as PVDF), polyphenylene sulfide (hereinafter referred to as PPS) and polyether ether ketone (hereinafter referred to as PEEK) are also exemplified for the use thereof, and the usable temperature range of these resin valves include 60°C or higher which is the temperature that the polyvinyl chloride resin does not afford to.

However, each of these resins has merits and demerits and there is a limitation on use. The service temperature of CPVC is up to 90°C or lower, which is higher than that of PVC. However, CPVC cannot be used at a higher temperature than 90°C (particularly, it cannot be used at about 100°C). In addition, CPVC is not suitable for use in an alkaline chemical solution because of inferior resistance to alkaline, resulting in limitation on use depending on a kind of fluid. The service temperature of PP is 90°C or lower, which is the same as that of CPVC, and cannot be used at a higher temperature since the resin is softened and rigidity of a valve deteriorates. However, PP has satisfactory alkaline resistance compared with CPVC and there is less limitation on use depending on the type of fluid. Although the service temperature of PVDF is 120°C or lower, it is not suitable for use in an alkaline line because of inferior resistance to alkaline, which imposes limitation on use depending on the type of fluid. In addition, the cost is slightly higher than PVC, CPVC and PP. Although the service temperature of both PPS and PEEK is 150°C or higher, the dimensional stability is inferior in a thick-wall molded article because of the high molding temperature. In order to perform injection molding of PPS and PEEK, it is necessary that the mold temperature is controlled within a range from 120 to 150°C in the case of PPS and from 130 to 170°C in the case of PEEK. Therefore, common mold temperature control with water is not able to cope with these resins, instead mold temperature control with oil is necessary, thus it takes labor and time to prepare a mold temperature control using oil and temperature raising in a die switch procedure at a molding site. In addition, both materials are very expensive so that high running cost is required for the production of valves made of PPS and PEEK and, particularly, they are not suitable for a valve with a large diameter. Therefore, conventional valves made of PPS and PEEK are used only for very limited use applications. As described above, a valve made of a resin was discriminatingly used according to use applications, taking heat resistance, chemical resistance, moldability and economical efficiency into consideration. However, there was a problem that there was not a single resin-made valve, which could be suitably used in an alkaline line at a temperature of higher than 90°C, particularly about 100°C, among the above resin valves. Therefore, when the valve was used, the choices were either lowering the service temperature and the service pressure to an extent at which the valve could be used, or using a valve whose price was very high.

Japanese unexamined patent publication No. 8-152073 discloses a diaphragm valve comprising a body, which has a fluid inlet port and a fluid outlet port, a flow path formed therein communicated with said fluid inlet port and said fluid outlet port, a valve seat formed in said flow path and a valve element which is pressed on or separated from said valve seat by pivotal or vertical motion, thereby closing or opening said flow path.

Document XP-002636834 of General Electric Company Water & Process Technologies discloses water valves made of composite material. The valve body and cap are molded from a glass-filled Noryl thermoplastic.

Document XP-002636835 of General Electric Company Water & Process Technologies describes a diaphragm valve made of glass-reinforced Noryl.

US-patent application publication US 2007/0108056 A1 discloses a fluid treatment apparatus comprising a valve, said valve being fabricated by injection molding a polymer, such as Noryl.

US-patent publication US 4,777,977 describes a butterfly valve housing, the valve housing including a core body made of metallic material and a covering body made of plastic material, e.g. Noryl.

Japanese Patent Abstract JP 11-181195 discloses a resin composition comprising 25-90 pts.wt. syndiotaetic styrene polymer as ingredient A, 5-70 pts.wt. a polyphenylene ether resin at least partly modified as ingredient B, 5-35 pts.wt. $\alpha$-olefin/arom. Monovinylidere compound copolymer as ingredient C, and 10-200 pts.wt. inorganic filler as ingredient D.

European patent application EP 0 129 762 A2 discloses a composition of a polyphenylene ether resin, a polyalkenyl aromatic and a minor, flame-retardant amount of one or more halogenated aromatic compounds. These compositions may be used, e.g. for valve seats.

DISCLOSURE OF THE INVENTION

The present invention has been made so as to overcome the above drawbacks of a conventional resin-made valve, and to provide a valve which has rigidity in such an extent that neither failure nor leakage does not occur even if a high internal pressure is applied in the short term in a high temperature range (60 to 95°C) and is suitably used in an alkaline line in a high temperature range, and is also excellent in balance between high-temperature creep characteristics and impact strength, and can use the same production facility as that of a vinyl chloride resin.

The present inventors have intensively studied so as to develop a valve having properties suited for an alkaline line in a high temperature range (60 to 95°C), and found that the above object can be achieved by using a polyphenylene ether-based resin composition, and thus the present invention has been completed.

A first characteristic feature of the present invention is a valve comprising a body, which has a fluid inlet port and a fluid outlet port, a flow path formed therein communicated with the fluid inlet port and the fluid outlet port, and a valve seat formed in the flow path; and a valve element, which is pressed on or separated from the valve seat by pivotal or vertical motion, thereby closing or opening the flow path; wherein at least the body is made of a polyphenylene ether-based resin composition containing a polyphenylene ether-based resin and a polystyrene-based resin as essential components. A second characteristic feature thereof is that a tensile strength is 20 MPa or more anda tensile elastic modulus is 1,000 MPa or more under an atmosphere at 95°C. A third characteristic feature thereof is that a notched Izod impact strength is 7.0 kJ/m$^2$ or more under an atmosphere at 23°C. A fourth characteristic feature thereof is that a linear expansion coefficient is from $50 \times 10^{-5}$/°C to $8.0 \times 10^{-5}$/°C. A fifth characteristic feature thereof is that water does not leak from the valve when the valve is retained for 1 minute in a state where a water pressure of 5.0 MPa is applied by fully opening the valve under an atmosphere at 95°C. A sixth characteristic feature thereof is that a mold shrinkage factor of a molded article with a wall thickness of 10 mm is from 0.5 to 0.8%. A seventh characteristic feature thereof is that the polyphenylene ether-based resin composition contains 100 parts by mass of a polyphenylene ether-based resin and 50 to 120 parts by mass of a polystyrene-based resin as essential components, and also has a melt flow rate of 1.0 to 5.0 g/10 minutes after kneading. An eighth characteristic feature thereof is that the polyphenylene ether-based resin contains 1 to 15 parts by mass of a styrene-butadiene-based rubber whose styrene content is 10 to 40% and a weight average molecular weight is 200,000 or more based on 100 parts by mass of the polyphenylene ether-based resin. A ninth characteristic feature thereof is that a valve is any of diaphragm valve, ball valve, cock, butterfly valve, gate valve, stop valve, needle valve, pinch valve and check valve.

BRIEF DESCRIPTION OF THE DRAWINGS

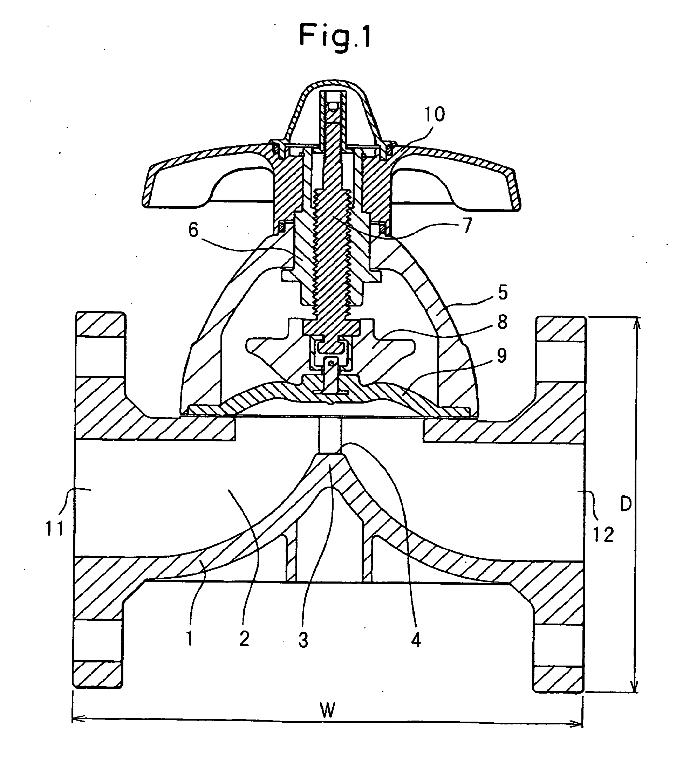

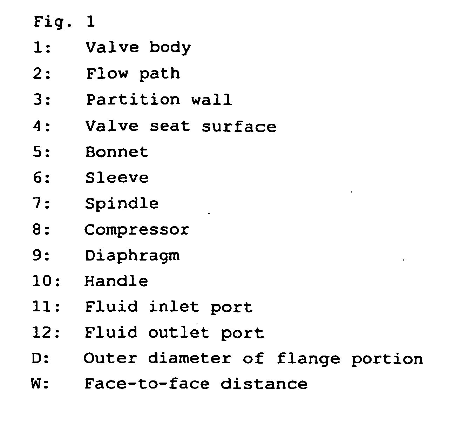

Fig. 1 is a longitudinal sectional view illustrating a fully opened state of a diaphragm valve which shows one example of the present invention.

DETAILED DESCRIPTION OF THE INVENTION

Subject-matter of the present invention is a value according to claims 1-8.

Regarding the polyphenylene ether-based resin composition used in a valve of the present invention, the tensile strength under an atmosphere at 95°C is preferably 20 MPa or more, and more preferably from 20 to 40 MPa. The tensile elastic modulus under an atmosphere at 95°C is preferably 1,000 MPa or more, and more preferably from 1,000 to 2,000 MPa. The tensile strength is preferably 20 MPa or more so as to have rigidity in a high temperature range (60 to 95°C) and high-temperature creep characteristics which are necessary for long-term lifetime of a valve in a high temperature range, and to maintain high sealing performances by retaining the strength of a valve seat surface. The tensile strength is preferably 40 MPa or less so as to maintain flexibility of a valve against such impact as water hammer. The tensile elastic modulus is an indicator of rigidity at a high temperature and the tensile elastic modulus is preferably 1,000 MPa so as to impart rigidity at a high temperature and to maintain sealing performances by suppressing deformation due to bulge of the valve by an internal pressure, and is preferably 2,000 MPa or less so as to maintain flexibility of the valve against impact.

The notched Izod impact strength is preferably 7.0 kJ/m$^2$ or more under an atmosphere at 23°C regarding the polyphenylene ether-based resin composition used in the valve of the present invention, and more preferably from 7.0 to 15.0.kJ/m$^2$. The valve has a large wall thickness and is therefore used as a general valve (specification of 1.0 MPa class) without any problem even when the Izod impact strength is slightly low (about 5.0 kJ/m$^2$). Since impact due to a water hammer or other causes increases according to a pressure in use applications under high pressure (long-term use under about 1.5 to 2.0 MPa is assumed), the Izod impact strength is preferably 7.0 kJ/m$^2$ or more so as to impart sufficient resistance to the impact and for the valve to maintain resistance even when deterioration of the material due to long-term use of the valve or due to a chemical solution. It is preferably 15.0 kJ/m$^2$ or less so as to maintain resistance to cracking due to impact while maintaining the tensile strength.

The linear expansion coefficient of the valve body of the present invention is preferably from 5.0 × 10$^{-5}$/°C to 8.0 m × 10$^{-5}$/°C. This is because of preventing the long lifespan of the valve from damaged due to leakage of a fluid by deformation of the valve or strain at the connection portions between a valve body and a sealed portion of a valve seat or between a pipe and a joint, or due to strain at respective portions of the valve, as a result of elongation in the longitudinal direction associated with thermal expansion when the valve is fixed and a high-temperature fluid is allowed to flow. It is preferred that water does not leak from the valve when the valve is retained for 1 minute in a state where a water pressure of 5.0 MPa is applied by fully opening the valve under an atmosphere at 95°CAs used herein, an operation under an atmosphere at 95°C may be carried out by either applying an internal pressure in a state where the ambient temperature is controlled to 95°C, or allowing a fluid of 95°C to flow before applying an internal pressure. In general, a valve made of a thermoplastic resin composition (specification of 1.0 MPa class) may potentially suffer from leakage when a high water pressure of 5.0 MPa is applied at a normal temperature (23°C) because of the lack of rigidity, therefore it is necessary to find a countermeasure for high pressure. When the temperature becomes as high as 95°C, the valve expands and also rigidity of the valve decreases, and if a pressure as high as 5.0 MPa is applied to the valve in a state where rigidity decreases, the valve expands due to a water pressure. As a result of expansion and bulge, the valve is deformed and dimensional change of each portion occurs, resulting in deterioration of sealing properties of the sealed portion of the valve.

Therefore, when water does not leak from the valve when the valve is retained for 1 minute in a state where a water pressure of 5.0 MPa is applied under an atmosphere at 95°C, the valve is suitably used as a valve for high temperature use, which is to be used in a high temperature range (60 to 95°C) or a temperature at about 100°C under a high pressure to be applied.

In the case of a pipe, a retention time when a tensile load is varied at a constant temperature is sought by conversion using the Naday's equation and a circumferential stress-time characteristic graph with reference to DIN 8087, from a relation among temperature, tensile load and retention time in a high-temperature creep test. Application of the tensile load is equivalent to a pipe internal pressure in the case of pipe, and the pipe internal pressure corresponding to the tensile load varies with a pipe wall thickness and a pipe outer diameter and is calculated from the Naday's equation of Equation 1. Test stress in Equation 1 is tensile load.

$$\text{Pipe internal pressure} = (2 \times \text{pipe wall thickness} \times \text{test stress})/(\text{pipe outer diameter} - \text{pipe wall thickness})$$

Equation 1

Equation 1 can also be applied for the case of a valve. In the valve, calculation of the inner diameter and conversion of a retention time are performed by replacing the valve with a pipe having a minimum wall thickness, based on a relation between an inner diameter and a minimum wall thickness.

In the valve of the present invention, it is preferred that the time reaching to failure is 1,000 hours or longer, in high-temperature creep characteristics in which a tensile load of 5.0 MPa is applied under an atmosphere at 95°C. In the case where the minimum wall thickness is 6.25 mm in the valve having a diameter of 25 mm (inner diameter 25 mm), the tensile load of 5.0 MPa corresponds to an internal pressure of 1.83 MPa when calculation is performed by Equation 1 by replacing the items with a pipe having a pipe outer diameter of 37.5 mm and a pipe wall thickness of 6.25 mm, and thus the valve is retained for 1,000 or more under an atmosphere at 95°C in a state where the internal pressure of 1.83 MPa is applied. In the case where the retention time is 10 years under an atmosphere at 95°C, the internal pressure is calculated as 20 MPa when conversion is made by the Naday's equation and a circumferential stress-time characteristic graph with reference to DIN 8078, which indicates the valve under an atmosphere at 95°C and the internal pressure of 1.20 MPa has lifetime of 10 years.

In contrast, in the case of a valve made of a polypropylene-based resin composition among other materials, similarly a valve having a diameter of 25 mm in which the minimum wall thickness is 6.25 mm, failure occurs within about 10 hours when the internal pressure of 1.83 MPa is applied under an atmosphere at 95°C. It is necessary that the internal pressure is decreased to 0.80 MPa under an atmosphere at 95°C so as to be retained 1,000 hours or more. When conversion is made to allow the retention time to be 10 hours under an atmosphere at 95°C, the internal pressure ends up to 0.8 MPa. Thus, it is found that the allowable pressure of the valve made of the polyphenylene ether-based resin composition is 1.5 times larger than that of the valve made of the polypropylene-based resin composition, and that thus the valve is used for an usage under a higher pressure.

When the valve is used at 95°C or higher, for example, when the temperature is 100°C, the polypropylene-based resin composition is softened under the atmosphere partly because it is close to a softening temperature of the composition, and thus the strength as a valve for high temperature use cannot be sufficiently retained. In contrast, the polyphenylene ether-based resin composition is not softened and therefore it can be used without any problems, although there is a limitation that the service pressure is decreased when the temperature, tensile load and retention time are converted (in the case of a valve having an inner diameter of 25 mm and a minimum wall thickness of 6.25 mm, when calculation is performed by replacing the valve with a pipe having a pipe outer diameter of 37.5 mm and a pipe wall thickness of 6.25 mm, the internal pressure is 0.60 MPa in order to adjust the retention time to 10 years under an atmosphere at 100°C). Namely, the valve has chemical resistance, which has never been fully attained by a piping member made of existing other resin compositions, is available in use at a high temperature range (60 to 95°C) and the temperature of about 100°C, and is best suited for use as a piping member in applications for higher temperature compared with the piping member made of the polypropylene-based resin composition.

The mold shrinkage factor of the valve of the present invention is preferably from 0.5 to 0.8%. More specifically, the mold shrinkage factor in the flow direction in a molded article having a wall thickness of 10 mm is preferably from 0.5 to 0.8%, and the mold shrinkage factor in the vertical direction is preferably from 0.5 to 0.7%. The mold shrinkage factor varies depending on a kind of resin and difference in the amount of a resin to be mixed. The polyphenylene ether-based resin composition having the mold shrinkage factor of 0.5 to 0.8 has the mold shrinkage factor nearly equivalent to that of the vinyl chloride resin. Therefore, when the polyphenylene ether-based resin composition is injection-molded using a die for a valve made of a vinyl chloride resin, a valve with nearly the same dimensions as those of a valve molded using the vinyl chloride resin, is obtained. Therefore, the same production facility as that of a conventional vinyl chloride resin can be used and it is unnecessary to extend the production facility for polyphenylene ether-based resin composition so as to prepare line up of the product, and thus even more cost is not required and also an installation space for the production facility is not required.

The polyphenylene ether-based resin composition has high mechanical strength and elastic modulus, but has poor fluidity, and therefore it cannot be molded alone and it is necessary to mold after improving fluidity by mixing other resins. Examples of the resin used include a polystyrene-based resin, a polyamide-based resin and a polypropylene-based resin, and the polystyrene-based resin has well-balanced required characteristics, taking characteristics required for the valve (high-temperature creep characteristics, mold shrinkage ratio, chemical resistance and cost) into consideration.

In the present invention, the mixing ratio of the polyphenylene ether-based resin to the polystyrene-based resin must be adjusted to the range which satisfies characteristics required for the valve for high temperature use, and the amount of the polystyrene-based resin is preferably from 50 to 120 parts by mass based on 100 parts by mass of the polyphenylene ether-based resin. The amount of the polystyrene-based resin is 50 parts by mass or more so as to improve moldability by increasing impact strength and fluidity, and the amount of the polystyrene-based resin is preferably 120 parts by mass or less so as to impart satisfactory high-temperature creep characteristics, suppress decrease in mechanical strength, and retain heat resistance. Also in order to obtain the mold shrinkage ratio equivalent to that of the vinyl chloride resin, the amount of the polystyrene-based resin is from 50 to 120 parts by mass based on 100 parts by mass of the polyphenylene ether-based resin. The polyphenylene ether-based resin composition to be used may be prepared by blending the polyphenylene ether-based resin with the polystyrene-based resin, or prepared by graft copolymerization of both resins. Satisfactory workability and long-term physical properties are given by graft copolymerization, and high-temperature creep characteristics are particularly improved.

In the present invention, it is necessary that MFR of the polyphenylene ether-based resin is from 1.0 to 5.0 g/10 minutes. In order to impart fluidity of a resin composition required for injection molding and to obtain satisfactory productivity for molding a thick-wall valve, MFR is preferably 1.0 g/10 minutes or more. In order to have fluidity necessary for injection molding of a resin composition, and particularly to gain favorable productivity in molding a valve with a thick wall, MFR is preferably 1.0 g/10 minutes or more, while in order to use the polyphenylene ether-based resin used for the valve of the present invention for extrusion molding of a pipe, to obtain satisfactory high-temperature creep characteristics, and to suppress drawdown of the resin composition in pipe extrusion molding, MFR is preferably 5.0 g/10 minutes or less. MFR of the polyphenylene ether-based resin composition is measured according to JIS K7210 under the conditions of a test temperature of 250°C and a test load of 10 kg.

The polyphenylene ether-based resin composition of the present invention may contain other polymers as long as characteristics required for the valve are within a tolerance limit. Other polymers are not particularly limited as long as they do not cause deterioration of characteristics of the valve, and a styrene-butadiene-based rubber is exemplified as a particularly preferred one. The impact strength is increased while maintaining high-temperature creep characteristics by mixing the styrene-butadiene-based rubber.

The amount of the styrene-butadiene-based rubber is preferably from 1 to 15 parts by mass based on 100 parts by mass of the polyphenylene ether-based resin. In order to obtain satisfactory high-temperature creep characteristics and impact strength, the amount of the styrene-butadiene-based rubber is preferably 1 part by mass or more. In order to obtain satisfactory heat resistance and rigidity, the amount of the styrene-butadiene-based rubber is preferably 15 parts by mass or less. It is necessary that the total amount of other polymers is adjusted within a range from 1 to 15 parts by mass based on 100 parts by mass of the polyphenylene ether-based resin.

The styrene content of the styrene-butadiene-based rubber is preferably from 10 to 40%, and more preferably from 15 to 35 parts by mass. When the styrene content of the styrene-butadiene-based rubber is too low, change in physical properties is subtle. In contrast, when it is too high, the elastic modulus decreases and the mechanical strength decreases, while fluidity improves, and thus moldability of the valve improves. Therefore, the styrene content is preferably 10% or more so as to satisfy high-temperature creep characteristics and impact strength required for the valve in a well balanced manner, while it is preferably 40% or less so as to obtain satisfactory compatibility and to satisfy high-temperature creep characteristics and impact strength in a well balanced manner.

It is necessary that the weight average molecular weight of the styrene-butadiene-based rubber of the present invention is 200,000 or more. Since the impact strength is increased but the high-temperature creep characteristics remarkably deteriorate when a styrene-butadiene-based rubber having a weight average molecular weight of 200,000 or less is mixed, the weight average molecular weight is preferably 200,000 or more so as to obtain satisfactory high-temperature creep characteristics and impact strength. Since the high-temperature creep characteristics improve when the weight average molecular weight of the styrene-butadiene-based rubber increases more, the upper limit of the weight average molecular weight is not particularly limited. It is preferred that the weight average molecular weight is practically about several millions, and specifically from 200,000 to 3,000,000 so that it is not difficult to produce a styrene-butadiene rubber by increasing the weight average molecular weight. It is also preferred that MFR does not change or a little decline after kneading the polyphenylene ether-based resin, the polystyrene-based resin and the styrene-butadiene-based resin compared with NMR before kneading. In order to prevent an increase in MFR after kneading, it is necessary that the weight average molecular weight be 200,000 or more in view of increasing the molecular weight to an extent which does not allow MFR of the styrene-butadiene rubber to be measured, since MFR decreases after kneading when the styrene-butadiene rubber has a high molecular weight to that extent (see Example 5 and Example 6 in Table 1, according to a difference in the molecular weight of the styrene-butadiene rubber, MFR after kneading of Example 5 (molecular weight of 280,000) decreased compared with MFR after kneading of Example 6 (molecular weight of 100,000)).

Any method and any catalyst may be used as a polymerization method and a polymerization catalyst of a styrene-butadiene-based rubber of the present invention. In view of chemical resistance and weatherability when the styrene-butadiene-based rubber is mixed with a polyphenylene ether-based resin and a polystyrene-based resin, a hydrogenation rate is preferably close to 100%. In view of weatherability, heat resistance and chemical resistance, a specific hydrogenation rate is preferably 85% or more, more preferably 90% or more, and still more preferably 95% or more.

It is necessary that the amount of the styrene-butadiene-based rubber is from 1 to 15 parts by mass based on 100 parts by mass of the polyphenylene ether-based resin. The amount of the styrene-butadiene-based rubber is preferably 1 part by mass or more so as to obtain satisfactory high-temperature creep characteristics and impact strength, and is preferably 15 parts by mass or less so as to have rigidity at a high temperature and to maintain sealing properties.

BEST MODE FOR CARRYING OUT THE INVENTION

Known polyphenylene ether-based resins can be used as the polyphenylene ether-based resin of the present invention, and may be in the form of a homopolymer or a copolymer. Examples thereof include poly(2,6-dimethyl-1,4-phenylene)ether, poly(2-methyl-6-ethyl-1,4-phenylene)ether, poly(2,6-diethyl-1,4-phenylene)ether, poly(2-ethyl-6-n-propyl-1,4-phenylene)ether, poly(2,6-din-propyl-1,4-phenylene)ether, poly(2-methyl-6-n-butyl-1,4-phenylene)ether, poly(2-ethyl-6-isopropyl-1,4-phenylene)ether, poly(2-methyl-6-chloroethyl-1,4-phenylene)ether, poly(2-methyl-6-hydroxyethyl-1,4-phenylene)ether, poly(2-methyl-6-chloroethyl-1,4-phenylene)ether, poly(2,6-dimethoxy-1,4-phenylene) ether, poly(2,6-dichloromethyl-1,4-phenylene)ether, poly(2,6-dibromomethyl-1,4-phenylene)ether, poly(2,6-diphenyl-1,4-phenylene)ether, poly(2,6-ditolyl-1,4-phenylene)ether, poly(2,6-dichloro-1,4-phenylene)ether, poly(2,6-dibenzyl-1,4-phenylene)ether and poly(2,5-dimethyl-1,4-phenylene)ether.

Examples of the polystyrene-based resin used in the polyphenylene ether-based resin composition of the present invention include homopolymers of styrene and styrene derivatives, for example, polystyrene, rubber-modified polystyrene (high impact polystyrene) and syndiotactic polystyrene, and also include styrene-based copolymers, for example, a styrene-acrylonitrile copolymer (AS resin) and a styrene-acrylonitrile-butadiene copolymer (ABS resin).

Among these, high impact polystyrene is preferably used in view of satisfactory compatibility and enhancing impact strength.

The polyphenylene ether-based resin composition of the present invention may optionally contain antioxidants, ultraviolet absorbers, and stabilizers such as photostabilizers, thereby making it possible to improve thermostability and light resistance of the composition.

Examples of the antioxidants include hindered phenol-based antioxidants such as 2,6-di-t-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate and 2-1-(2-hydroxy-3,5-di-tert-pentylphenyl)] acrylate; sulfur-based antioxidants such as dilauryl thiodipropionate and lauryl stearyl thiodipropi-onate pentaerythritol-tetrakis($\beta$-lauryl thiopropionate); and phosphorus-based antioxidants such as tris(nonylphenyl) phosphite and tris(2,4-di-t-butylphenyl) phosphite.

Examples of the ultraviolet absorbers and stabilizers include benzotriazole-based ultraviolet absorbers such as 2-(2'-hydroxy-5'-methylphenyl)benzotriazole, 2-(2'-hydroxy-3',5'-t-butylphenyl)benzotriazole and 2-(2'-hydroxy-3',5'-di-t-butylphenyl)-5-chlorobenzotriazole; benzophenone-based ultraviolet absorbers such as 2-hydroxy-4-methoxybenzophenone; triazine-based ultraviolet absorbers; and hindered amine-based photostabilizers.

In the polyphenylene ether-based resin composition of the present invention, inorganic fillers such as spherical fillers, tabular fillers and fibrous fillers may be used, if necessary. These fillers may be used alone, or two or more kinds of fillers may be used in combination. Examples of spherical fillers include calcium carbonate, mica, barium sulfate, calcium sulfate, clay, pearlite, Silas balloon, diatomaceous earth, calcined alumina and calcium silicate. Examples of tabular fillers include talc and mica. Examples of fibrous fillers include glass fibers, carbon fibers, boron fibers, silicon carbide fibers, potassium titanate fibers, polyamide fibers, polyester fibers, polyallylate fibers and polyimide fibers.

The polyphenylene ether-based resin composition may optionally contain flame retardants (halogen-based flame retardants such as chlorinated polyethylene and decabromodiphenyl ether, phosphorus-based flame retardants such as tricresyl phosphate, and inorganic flame retardants such as aluminum hydroxide); lubricants (hydrocarbon-based lubricants such as liquid paraffin, fatty acids such as stearic acid, higher alcohol-based lubricants such as stearyl alcohol, amide-based lubricants such as stearic acid amide, and metal soap-based lubricants such as calcium stearate); antistatic agents (polyalkylene glycol and sulfonic acid group-containing compound); antibacterial agents (inorganic antibacterial agents such as zeolite and organic antibacterial agents such as 2-(4-thiazolyl)benzoimidazole); coloring agents (inorganic coloring agents such as titanium oxide and organic coloring agents such as carbon black). The amount of them varies depending on a kind of additives and is therefore preferably that which allows the effect of additives to be fully exerted without reducing physical properties of the composition. There is no particular limit on the method of melt kneading after mixing them, and a polyphenylene ether-based resin composition whose components are dispersed uniformly is obtained by using a single screw extruder, a twin screw extruder or a kneader.

Furthermore, the moisture content of the polyphenylene ether-based resin composition of the present invention is preferably less than 250 ppm (measured by the Karl Fisher method) before molding. Incidentally, 100 ppm is equivalent to 0.01%. In order to prevent poor appearance (silver streak) and generation of bubbles inside, the moisture content is preferably less than 250 ppm, and ideally 0 ppm. Since poor appearance and bubbles are likely to be generated depending on the moisture content in the case of a thick-wall valve, it is preferred to control the moisture content so as to decrease a fraction defective.

The polyphenylene ether-based resin composition of the present invention can be used for various valves, and examples of preferred valves include diaphragm valve, ball valve, cock, butterfly valve, gate valve, stop valve, needle valve, pinch valve and check valve. The valve may have a functional structure as long as the configuration of the valve is the same, and may also have a configuration capable of adjusting a flow rate of a fluid, a configuration capable of maintaining a flow rate constant, and a configuration capable of preventing the fluid backflow.

The method of molding a valve using the polyphenylene ether-based resin composition of the present invention preferably includes, but is not limited to, an injection molding but it is also allowed to mold a round bar made of the polyphenylene ether-based resin composition by cutting.

The valve produced by using the polyphenylene ether-based resin composition of the present invention has the following excellent characteristics.

(1) When a body of a valve is made of the polyphenylene ether-based resin composition, the obtained valve is used in an acidic or alkaline chemical solution line in a high temperature range (60 to 95°C) and also used at a temperature of about 100°C.

(2) Since the tensile strength is 20 MPa or more and the tensile elastic modulus is 1,000 MPa or more under an atmosphere at 95°C, high sealing performances is maintained by suppressing deformation and bulge of a valve due to a water pressure applied at a high temperature.

(3) Since the notched Izod impact strength under an atmosphere at 23°C is 7.0 kJ/m$^2$ or more, it is possible to maintain resistance of a valve even when deterioration of a material occurs due to long-term use of a valve or due to a chemical solution.

(4) Since the linear expansion coefficient is from $5.0 \times 10^{-5}/°C$ to $8.0 \times 10^{-5}/°C$, it is possible to maintain high sealing performances by suppressing a dimensional change due to expansion under a high temperature.

(5) Since water does not leak from the valve when the valve is retained for 1 minute in a state where a water pressure of 5.0 MPa is applied, the value is used in a high temperature range (60 to 95°C) and also used at a temperature of about 100°C under a high pressure applied.

(6) Since the mold shrinkage factor of the polyphenylene ether-based resin composition is from 0.5 to 0.8%, the same production facility as that of a vinyl chloride resin can be used.

(7) A piping member having an excellent balance between high-temperature creep characteristics and impact strength is obtained by adding 50 to 120 parts by mass of a polystyrene-based resin to 100 parts by mass of a polyphenylene ether-based resin as essential components.

(8) By limiting MFR of a polyphenylene ether-based resin within a range from 1.0 to 5.0 g/10 minutes, a satisfactory molded article free from warp is obtained while ensuring fluidity upon molding, and high-temperature creep characteristics is maintained.

(9) The impact strength is increased without deterioration of high-temperature creep characteristics by mixing a styrene-butadiene-based rubber having a weight average molecular weight of 200,000 or more.

Embodiment in the present invention will be explained below with reference to the accompanying drawings, but the present invention is not limited to the present embodiment. Fig. 1 is a longitudinal sectional view illustrating a fully opened state of a diaphragm valve which shows one example of the present invention.

The numeral 1 is a valve body made of a polyphenylene ether-based resin composition, which has a flow path 2 communicated with a fluid inlet port 11 and a fluid outlet port 12 formed therein, respectively, and a partition wall 3 having a gentle arc-shaped curved surface, by which the flow path is curved, in the middle of the flow path 2. On a top surface of the partition wall 3, a valve seat surface 4 is formed. The numeral 5 is a bonnet made of a polyphenylene ether-based resin composition fixed on the upper portion of the valve body 1, and a sleeve 6 made of a copper alloy is supported at an upper center opening portion of the bonnet 5. The numeral 7 is a spindle made of a stainless steel engaged with a male screw provided inside the sleeve 6. The numeral 8 is a compressor made of PVDF and is fixed to a lower portion of the spindle 7. The numeral 9 is a diaphragm as a valve element and is fixed to the compressor 8, whose peripheral portion is sandwiched between the valve body 1 and the bonnet 5 and is attached to or detached from the upper end of the partition wall by a vertical motion of the spindle 7. The numeral 10 is a handle made of PP, which is fitted to the upper circumference of the sleeve 6 and is arranged at the upper end of the bonnet 5.

Next, the operation when a fluid is allowed to flow through a diaphragm valve of the present invention will be explained.

When the diaphragm valve is fully opened (in the state shown in Fig. 1), a handle 10 is rotated in the direction to close the valve. By the rotation of the handle 10, a spindle 7 descends and also a compressor 8 descends. When the compressor 8 descends, the compressor 8 presses a diaphragm 9 downward. Furthermore, when the handle 10 is rotated in the direction to close the valve, the diaphragm 9 is pressed against a valve seat surface 4 on a top surface of the partition wall 3 and the flow path 2 is shielded, and thus the valve was fully closed. Next, if the handle 10 is rotated in the direction to close the valve when the diaphragm valve is fully closed, the spindle ascends by the rotation of the handle 10 and also the compressor 8 ascends. When compressor 8 ascends, the diaphragm 9 is detached from the valve seat surface 4 and the flow path 2 is opened, and thus the diaphragm valve is opened, while the diaphragm ascends up to limit of the opening position and the flow path 2 is opened, and thus the diaphragm valve is fully opened (in the state shown in Fig. 1).

At this time, since the valve body 1 is made of a polyphenylene ether-based resin composition, the obtained valve can be used at a temperature of about 100°C, let alone in a high temperature range (60 to 95°C), and it is also suitably used in an alkaline line at a temperature of about 100°C because of excellent chemical resistance against acid or alkali. The valve can also be used in a line of high temperature and high pressure for a long period because of the various physical strengths possessed under an atmosphere at 95°C. Further, the price of the resin of the polyphenylene-based ether-based resin composition is between that of PP and PVDF, or slightly higher than that of PP, and the composition is molded without spending labor and time, since the mold temperature is 40 to 80°C, which enables mold temperature control with water as usual, not requiring oil, and which does not require mold temperature control and temperature raise of dies by a die switch as is done in molding valves made of PPS and PEEK at a molding site.

Next, regarding a valve made of a polyphenylene ether-based resin composition of the present invention, a diaphragm having a diameter of 25 mm shown in Fig. 1 was molded and the performance was evaluated by test methods shown below.

(1) Water pressure resistance test of valve

A diaphragm valve molded using a polyphenylene ether-based resin was retained for 60 minutes in a state where warm water at 95°C is passed therethrough in a fully opened state. After a water pressure was gradually increased, the valve was retained for 1 minute in a state where a water pressure of 5.0 MPa is applied. At this time, it was visually confirmed whether failure of the valve and fluid leakage from the sealed portion occurred or not. When there was no fluid leakage after retaining it for 1 minute, the diaphragm was rated "Pass". When failure of the valve or fluid leakage occurred before the water pressure reached to 5.0 MPa, the water pressure upon failure or fluid leakage was measured.

(2) Alkaline resistance test

In accordance with DIN 16888, a test piece was immersed in a 30% NaOH solution contained in an exclusive container and placed in an oven maintained at 95°C. After a lapse of 112 days, a tensile test of the test piece was performed. The test sample whose retention rate of a tensile strength is 50% or more is rated "Pass", whereas, the test sample whose retention rate of a tensile strength is less than 50% is rated "Fail".

(3) Tensile test

In accordance with JIS K7113, a tensile test was performed in an atmosphere at 23±1°C and 95±1°C using a test piece molded by injection molding, and then a tensile strength and a tensile elastic modulus were respectively measured.

(4) Notched Izod impact test

In accordance with JIS K7110, Izod impact strength was measured in an atmosphere at 23±1°C using a test piece molded by injection molding.

(5) Linear expansion coefficient

In accordance with JIS K7197, a test piece was cut out from a body of a diaphragm valve molded by injection molding and then a linear expansion coefficient was measured at a temperature within a range from 23°C to 95°C.

(6) High-temperature creep characteristics

In accordance with DIN 8078, the time ending up to failure was measured on a valve made of the polyphenylene ether-based resin composition (measuring 25 mm in inner diameter and 6.0 mm in minimum wall thickness), by applying an internal pressure of 1.93 MPa (an internal pressure corresponding to a test stress of 5.0 MPa was calculated by the Naday's equation of Equation 1 by replacing an inner diameter and a minimum wall thickness of the valve with a pipe having an outer diameter of 37.0 mm and a wall thickness of 6.0 mm) at 95±1°C. When a bolt is loosened at high temperature, the bolt is retightened.

$$\text{Internal pressure of pipe} = (2 \times \text{wall thickness of pipe})/(\text{outer diameter of pipe} - \text{wall thickness of pipe})$$

Equation 1

(7) Mold shrinkage factor

Using an injection molding machine, a diaphragm valve body (die for a vinyl chloride resin, basic dimension: outer diameter of flange portion (D in Fig. 1) of 125 mm, face-to-face distance (W in Fig. 1) of 130 mm) was molded and allowed to stand in an atmosphere at 23°C for 2 days, and then an outer diameter of the flange portion (two-point measurement in a vertical direction at both ends of a valve) and a face-to-face distance (two-point measurement) were measured. The measurement was performed using 10 test pieces and averages of the outer diameter D of the flange portion and the face-to-face distance W were calculated, and then each mold shrinkage factor was calculated from the obtained averages values of the outer diameter of the flange portion and the face-to-face distance according to Equation 2. For comparison, a vinyl chloride resin (the same resin as in Comparative Example 1) was molded in the same manner, and the dimensions were measured and the mold shrinkage factor was calculated. Incidentally a basic dimension denotes a target dimension measured from a molded article, which means a product dimension. Regarding the die for a vinyl chloride resin used in this test, dimensional tolerance from a basic dimension upon molding with a vinyl chloride resin was adjusted to be fallen within a range of $\pm 0.2$ mm in terms of the outer diameter of the flange portion, and within a range of $\pm 0.2$ mm in terms of the face-to-face distance. The dimensions of the die (measured value) were designed to satisfy the outer diameter of the flange portion to be 125.95 mm and the face-to-face distance to be 130.87 mm. In this test, the valve was rated "Pass" when the mold shrinkage factor fell within a range from 0.5 to 0.8%, dimensional deviation from the basic dimension fell within a range of $\pm 0.2$ mm in terms of the outer diameter of the flange portion, and dimensional deviation fell within a range of $\pm 0.2$ mm in terms of the face-to-face distance. In a comparison in the mold shrinkage factors of resins among Examples and Comparative Examples shown in Table 1, the mold shrinkage factors of the face-to-face distance were described (the face-to-face distance with less dimensional variation was used as a standard, since an external of the flange portion has a large wall thickness and dimensional variation is high).

$$\texttt{Mold shrinkage factor = \{(dimension of die -}$$
$$\texttt{dimension of test piece)/dimension of die\} × 100}$$
$$\texttt{Equation 2}$$

(8) Measurement of MFR

In accordance with JIS K7210, MFR was measured under the conditions of a test temperature of 250°C and a test load of 10 kg.

EXAMPLES

First, using a diaphragm valve shown in Fig. 1, physical properties of valves whose body 1 and bonnet 5 were molded using polyphenylene ether-based resin compositions each having different compositions, and those of valves whose body and bonnet were molded using different resins, as well as those of resins used for the respective valves were compared.

Example 1

100 Parts by mass of a polyphenylene ether-based resin was mixed with 80 parts by mass of high impact polystyrene, a polystyrene-based resin, and the mixture was pelletized by kneading them using a twin screw extruder to prepare a polyphenylene ether-based resin composition having MFR of 3.62 after kneading. The obtained resin composition was dried to reduce the moisture content to less than 250 ppm, and a diaphragm valve made of a polyphenylene ether-based resin and various test pieces were molded at a cylinder temperature of 250°C using an injection molding machine. Then, measurement tests including a water pressure resistance test of valve, an alkaline resistance test, a high-temperature creep test, a tensile test, a linear expansion coefficient and a mold shrinkage factor were performed. The results are shown in Table 1. The detailed measurement results of the mold shrinkage factor are shown in Table 2.

Example 2

100 Parts by mass of a polyphenylene ether-based resin was mixed with 80 parts by mass of high impact polystyrene, and the mixture was palletized by kneading in the same manner as in Example 1 to prepare a polyphenylene ether-based resin composition having MFR of 1.57 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 3

100 Parts by mass of a polyphenylene ether-based resin was mixed with 60 parts by mass of high impact polystyrene, and the mixture was palletized by kneading in the same manner as in Example 1 to prepare a polyphenylene ether-based resin composition having MFR of 3.62 after kneading. The obtained resin composition was dried to reduce the moisture content to less than 250 ppm, and a diaphragm valve and various test pieces were produced using the obtained pellets, and then various evaluation tests were performed. The results are shown in Table 1. The detailed measurement results of a mold shrinkage factor are shown in Table 2.

Example 4

100 Parts by mass of a polyphenylene ether-based resin was mixed with 110 parts by mass of high impact polystyrene and the mixture was palletized by kneading them in the same manner as in Example 1 to prepare a polyphenylene ether-based resin composition having MFR of 4.50 after kneading. The obtained resin composition was dried to reduce the moisture content to less than 250 ppm, and a diaphragm valve and various test pieces were produced using the obtained pellets, and then various evaluation tests were performed. The results are shown in Table 1. The detailed measurement results of a mold shrinkage factor are shown in Table 2.

Example 5

100 Parts by mass of a polyphenylene ether-based resin was mixed with 80 parts by mass of high impact polystyrene, and the mixture was palletized by kneading them together with 13 parts by mass of a hydrogenated styrene-butadiene-based rubber (styrene content: 30%, weight average molecular weight: 230,000) in the same manner as in Example 1, so as to prepare a polyphenylene ether-based resin composition having MFR of 3.60 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 6

100 Parts by mass of a polyphenylene ether-based resin was mixed with 80 parts by mass of high impact polystyrene, and the mixture was palletized by kneading them together with 13 parts by mass of a hydrogenated styrene-butadiene-based rubber (styrene content: 30%, weight average molecular weight: 100,000) in the same manner as in Example 1 to prepare a polyphenylene ether-based resin composition having MFR of 4.23 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 7

100 Parts by mass of a polyphenylene ether-based resin, 80 parts by mass of high impact polystyrene and 13 parts by mass of a hydrogenated styrene-butadiene-based rubber (styrene content: 5%, weight average molecular weight: 230,000) were mixed and palletized by kneading in the same manner as in Example 1 to prepare a polyphenylene ether-based resin composition having MFR of 3.02 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 8

100 Parts by mass of a polyphenylene ether-based resin was mixed with 80 parts by mass of high impact polystyrene, and the mixture was palletized by kneading them together with 13 parts by mass of a hydrogenated styrene-butadiene-based rubber (styrene content: 50%, weight average molecular weight: 230,000) in the same manner as in Example 1 to prepare a polyphenylene ether-based resin composition having MFR of 4.15 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 9

100 Parts by mass of a polyphenylene ether-based resin was mixed with 80 parts by mass of high impact polystyrene, and the mixture was palletized by kneading them together with 18 parts by mass of a hydrogenated styrene-butadiene-based rubber (styrene content: 30%, weight average molecular weight: 230,000) in the same manner as in Example 1 to prepare a polyphenylene ether-based resin composition having MFR of 3.55 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 10 (not falling under the claims)

100 Parts by mass of a polyphenylene ether-based resin was mixed with 80 parts by mass of high impact polystyrene, and the mixture was palletized by kneading them in the same manner as in Example 1 to prepare a polyphenylene ether-based resin composition having MFR of 6.20 after kneading. The obtained resin composition was dried to reduce the moisture content to less than 250 ppm, and a diaphragm valve and various test pieces were produced using the obtained pellets, and then various evaluation tests were performed. The results are shown in Table 1.

Example 11 (not falling under the claims)

100 Parts by mass of a polyphenylene ether-based resin was mixed with 40 parts by mass of high impact polystyrene, and the mixture was palletized by kneading them in the same manner as in Example 1 to prepare a polyphenylene ether-based resin composition having MFR of 2.92 after kneading. The obtained resin composition was dried to reduce the moisture content to less than 250 ppm, and a diaphragm valve and various test pieces were produced using the obtained pellets, and then various evaluation tests were performed. The results are shown in Table 1. The detailed measurement results of a mold shrinkage factor are shown in Table 2.

Example 12 (not falling under the claims)

100 Parts by mass of a polyphenylene ether-based resin was mixed with 130 parts by mass of high impact polystyrene, and the mixture was palletized by kneading them in the same manner as in Example 1 to prepare a polyphenylene ether-based resin composition having MFR of 4.58 after kneading. The obtained resin composition was dried to reduce the moisture content to less than 250 ppm, and a diaphragm valve and various test pieces were produced using the obtained pellets, and then various evaluation tests were performed. The results are shown in Table 1. The detailed measurement results of a mold shrinkage factor are shown in Table 2.

Comparative Example 1

A diaphragm valve and various test pieces were molded using a resin composition of 100 parts by mass of a vinyl chloride-based resin, and various evaluation tests were performed. The results are shown in Table 1.

Comparative Example 2

A diaphragm valve and various test pieces were molded using a resin composition of 100 parts by mass of a chlorinated vinyl chloride-based resin, and various evaluation tests were performed. The results are shown in Table 1.

Comparative Example 3

A diaphragm valve and various test pieces were molded using a resin composition of 100 parts by mass of polypropylene, and various evaluation tests were performed. The results are shown in Table 1.

Comparative Example 4

A diaphragm valve and various test pieces were molded using a resin composition of 100 parts by mass of polyvinylidene fluoride and various evaluation tests were performed. The results are shown in Table 1.

Table 1

| | | Example 1 | Example 2 | Example 3 | Example 4 | Example 5 | Example 6 | Example 7 | Example 8 |
|---|---|---|---|---|---|---|---|---|---|
| Formulation (Parts by weight) | Polyphenylene ether-based resin | 100 | 100 | 100 | 100 | 100 | 100 | 100 | 100 |
| | Polystyrene-based resin (High impact polystyrene) | 80 | 80 | 60 | 110 | 80 | 80 | 80 | 80 |
| | Vinyl chloride resin | - | - | - | - | - | - | - | - |
| | Chlorinated vinyl chloride resin | - | - | - | - | - | - | - | - |
| | Polypropylene | - | - | - | - | - | - | - | - |
| | Polyvinylidene fluoride | - | - | - | - | - | - | - | - |
| | Styrene-butadiene-based rubber (Molecular weight: 100,000, Styrene content: 30%) | - | - | - | - | - | 13 | - | - |
| | Styrene-butadiene-based rubber (Molecular weight: 230,000, Styrene content: 5%) | - | - | - | - | - | - | 13 | - |
| | Styrene-butadiene-based rubber (Molecular weight: 230,000, Styrene content: 30%) | - | - | - | - | 13 | - | - | - |
| | Styrene-butadiene-based rubber (Molecular weight: 230,000, Styrene content: 50%) | - | - | - | - | - | - | - | 13 |
| Water pressure resistance test of valve | 23°C | Pass | Pass | Pass | Pass | Pass | Pass | Pass | Pass |
| | 95°C | Pass | Pass | Pass | Pass | Pass | Pass | Pass | Pass |
| Alkaline resistance test (immersed in 3.0% NaOH) | 95°C | Pass | Pass | Pass | Pass | Pass | Pass | Pass | Pass |
| Tensile strength (MPa) | 23°C | 63 | 63 | 66 | 48 | 58 | 58 | 43 | 58 |
| | 95°C | 34 | 34 | 36 | 24 | 31 | 31 | 37 | 32 |
| Tensile elastic modulus (MPa) | 23°C | 2282 | 2365 | 2562 | 2009 | 2159 | 2052 | 2011 | 2121 |
| | 95°C | 1743 | 1832 | 1928 | 1521 | 1701 | 1680 | 1610 | 1705 |
| Izod impact strength (kJ/cm$^2$) | | 8 | 8 | 8 | 11 | 14 | 14 | 7 | 12 |
| Linear expansion coefficient ($\times 10^{-5}$) | | 7 | 7 | 7 | 7 | 7 | 8 | 7 | 8 |
| Mold shrinkage factor (%) | | 0.59 | 0.58 | 0.60 | 0.58 | 0.61 | 0.59 | 0.60 | 0.60 |
| MFR after kneading (g/10 minutes) | | 3.62 | 1.57 | 3.62 | 4.50 | 3.60 | 4.23 | 3.02 | 4.15 |
| High-temperature creep characteristics (hr) | | >1000 | >1000 | >1000 | 970 | >1000 | 600 | 600 | 800 |

EP 2 163 798 B1

Table 1 (Continued)

| Formulation (Parts by weight) | | Example 9 | Example 10 | Example 11 | Example 12 | Comparative Example 1 | comparative Example 2 | Comparative Example 3 | Comparative Example 4 |
|---|---|---|---|---|---|---|---|---|---|
| | Polyphenylene ether-based resin | 100 | 100 | 100 | 100 | - | - | - | - |
| | Polystyrene-based resin (High impact polystyrene) | 80 | 80 | 40 | 130 | - | - | - | - |
| | Vinyl chloride resin | - | - | - | - | 100 | - | - | - |
| | Chlorinated vinyl chloride resin | - | - | - | - | - | 100 | - | - |
| | Polypropylene | - | - | - | - | - | - | 100 | - |
| | Polyvinylidene fluoride | - | - | - | - | - | - | - | 100 |
| | Styrene-butadiene-based rubber (Molecular weight: 100,000, Styrene content: 30%) | - | - | - | - | - | - | - | - |
| | Styrene-butadiene-based rubber (Molecular weight: 230,000, Styrene content: 5%) | - | - | - | - | - | - | - | - |
| | Styrene-butadiene-based rubber (Molecular weight: 230,000, Styrene content: 30%) | 18 | - | - | - | - | - | - | - |
| | Styrene-butadiene-based rubber (Molecular weight: 230,000, Styrene content: 50%) | - | - | - | - | - | - | - | - |
| Water pressure resistance test of valve | 23°C | Pass | Pass | Pass | Pass | Pass | Fail (3.8 MPa) | Fail (4.2 MPa) | Fail (4.7 MPa) |
| | 95°C | Pass | Pass | Pass | Pass | Fail (impossible to test) | Fail (impossible to test) | Fail (3.0 MPa) | Fail (4.2 MPa) |
| Alkaline resistance test (immersed in 3.0% NaOH) | 95°C | Pass | Pass | Pass | Pass | Fail (impossible to test) | Fail | Pass | Fail |
| Tensile strength (MPa) | 23°C | 55 | 63 | 72 | 44 | 57 | 61 | 34 | 58 |
| | 95°C | 29 | 33 | 37 | 19 | Impossible to test | Impossible to test | 15 | 22 |
| Tensile elastic modulus (MPa) | 23°C | 2090 | 1972 | 2673 | 1821 | 3300 | 3500 | 1340 | 1400 |
| | 95°C | 1650 | 1510 | 2250 | 1451 | Impossible to test | Impossible to test | 420 | 500 |
| Izod impact strength (kJ/cm²) | | 18 | 8 | 6 | 13 | 6 | 5 | 13 | 9 |
| Linear expansion coefficient (x $10^{-5}$) | | 8 | 7 | 6 | 8 | 7 | 7 | 11 | 12 |
| Mold shrinkage factor (%) | | 0.61 | 0.59 | 0.82 | 0.52 | 0.60 | 0.60 | 1.5 | 2.5 |
| MFR after kneading (g/10 minutes) | | 3.55 | 6.20 | 2.92 | 4.58 | - | - | - | - |
| High-temperature creep characteristics (hr) | | 800 | 800 | >1000 | 400 | Impossible to test | Impossible to test | >1000 | >1000 |

EP 2 163 798 B1

Table 2

| | | Vinyl chloride resin | Example 1 | Example 3 | Example 4 | Example 11 | Example 12 |
|---|---|---|---|---|---|---|---|
| Formulation (Parts by weight) | Polyphenylene ether-based resin | | 100 | 100 | 100 | 100 | 100 |
| | Polystyrene-based resin (High impact polystyrene) | | 80 | 60 | 110 | 40 | 130 |
| Measured value (mm) | Flange portion | 124.96 | 125.04 | 125.07 | 125.18 | 124.79 | 125.19 |
| | Face-to-face distance | 130.08 | 130.10 | 130.08 | 130.11 | 129.79 | 130.19 |
| Mold shrinkage factor (%) | Flange portion | 0.81 | 0.68 | 0.70 | 0.61 | 0.92 | 0.60 |
| | Face-to-face distance | 0.59 | 0.61 | 0.60 | 0.58 | 0.82 | 0.52 |
| Comparison with vinyl chloride resin | | | Pass | Pass | Pass | Fail | Pass |

As is apparent from Table 1, neither failure nor leakage occurs at 23°C and 95°C under a water pressure of 5.0 MPa in Examples 1 to 12. The numerical values of a water pressure resistance test of a valve in Table 1 show the pressure at which fluid leakage occurred. In Comparative Example 1, neither failure nor leakage occurs at 23°C under a water pressure of 5.0 MPa, while a test could not performed since the resin was softened at 95°C. In Comparative Example 2, fluid leakage occurred at 23°C under a water pressure of less than 5.0 MPa, while a test could not performed since the resin was softened at 95°C. In Comparative Examples 3 and 4, the resins were not softened at 95°C, while fluid leakage occurred at 23°C under a water pressure of less than 5.0 MPa and a pressure at which fluid leakage occurred further declined at 95°C. In an alkaline resistance test, valves were immersed in 30% NaOH at 95°C and given a retention rate of tensile elongation of 50% or more in Examples 1 to 12 and Comparative Example 3, allowing the valves to be suitably used in an alkaline line in a high temperature range. In Comparative Examples 1, 2 and 4, a retention rate of tensile elongation was 50% or less, not allowing the valves to be used in an alkaline line in a high temperature range. It was learned that valves made of a polyphenylene ether-based resin composition of the present invention had rigidity in such an extent that neither failure nor leakage does occur even if a high internal pressure is applied in the short term in a high temperature range (60 to 95°C), and passed a water pressure resistance test of a valve and an alkaline resistance test, which configured minimum pass lines to be acknowledged as a valve applicable to an alkaline line in a high temperature range. Thus, the present valve expresses superiority to other valves made of PVC, CPVC, PP and PVDF which do not pass both tests.

In a tensile test, both tensile strength and tensile elastic modulus show high numerical values at 23°C and 95°C in Examples 1 to 11, and the valves have high rigidity that is favorably applied to valves for high temperature use. Example 12 as well show favorable values except for a tensile strength which is slightly lower at 95°C. In Comparative Examples 1 and 2, the tensile strength at 23°C is nearly equivalent to that of Example 1 and the tensile elastic modulus is about 1.5 times higher than that of Example 1, while the measurement could not be performed at 95°C since the resins were softened. The resin was softened at around a temperature of 60°C or higher in Comparative Example 1, and at around a temperature of 90°C of higher in Comparative Example 2. In Comparative Example 3, the tensile strength was about 1/2 of that in Example 1 at 23°C and 95°C, the tensile elastic modulus was about 3/5 of that in Example 1 at 23°C, and the tensile elastic modulus was about 1/4 of that in Example 1 at 95°C. In Comparative Example 4, numerical values were nearly equivalent to or slightly higher than those of Comparative Example 3. Regarding the Izod impact strength, numerical values were low in Example 11, Comparative Example 1 and Comparative Example 2. Although these valves do not cause any problems in a general use, they are not suited for a long time use under a high pressure (it is possible to cope with the conditions by thickening a wall thickness or elaborating a structure). The values of linear expansion coefficient were almost identical in Example 1 to Example 12 and Comparative Example 1 to Comparative Example 2, while those of Comparative Example 3 and Comparative Example 4 were about 1.5 times that of Example 1. The values of mold shrinkage factor were almost identical in Example 1 to Example 10, Example 12 and Comparative Example 1 to Comparative Example 2, while the value in Example 11 is slightly higher than those in the above Examples, and those in Comparative Example 3 and Comparative Example 4 were two or more times larger than the value in Example 1. The high-temperature creep characteristics were low in the valve of Example 12, discouraging a long-term use, while the test was unable to be performed in Comparative Example 1 and Comparative Example 2 due to the resins being softened. However, satisfactory high-temperature creep characteristics are obtained in Example 1, Example 3 and Example 4.

Accordingly, a valve made of PVC is not able to be used in a high temperature range (60 to 95°C), while a valve made of CPVC is not suitable for use at a higher temperature than 90°C since the resin is softened when the temperature exceeds 90°C. In addition, the valves made of PP or PVDF are unsuitable for use under high temperature and high pressure, since the valve expands at a high temperature when the linear expansion coefficient is high, or the valve body expands under a high water pressure when the tensile elastic modulus is low, which causes decline in sealing performance at a sealed portion due to a dimensional change. Therefore, it is apparent that a valve made of the polyphenylene ether-based resin composition is most suitable for a valve for high temperature and high pressure use.

Next, as is apparent from a comparison among Example 1, Example 2 and Example 10, the high-temperature creep characteristics vary according to MFR that differs after kneading, in spite of an identical mixing ratio of a polyphenylene ether-based resin to a polystyrene-based resin. Furthermore, when a comparison is made in terms of difference of MFR after kneading by inclusion of Example 4 and Example 12, there is no particular change observed in the high-temperature creep characteristics according to MFR in the case of Example 1 and Example 2, but there observe decline in it to about 4/5 of Example 1 as MFR increases in Example 10. In Example 12, MFR further increases and therefore the high-temperature creep characteristics deteriorate to about 2/5 of Example 1. This is because the molecular weight of the polystyrene-based resin decreases when MFR decreases, and the high-temperature creep characteristics deteriorate when the molecular weight is low. The fluidity of a resin increases as MFR increases, but good fluidity causes a decline in strength of a valve in the case of a thick-wall molded article like a valve, because excessively good fluidity encourages generation of bubbles and voids. When the value of MFR decreases to 1.0 g/10 minutes or less, the fluidity of a resin composition decreases and thus poor appearance and warp of a molded article are likely to occur. When the value of MFR becomes too small, a valve is not able to be molded due to difficulty in flow of a resin composition. Therefore, in order to obtain high-temperature creep characteristics and satisfactory moldability of a valve, MFR(s) of Example 1, Example 2 and Example 4 are within a preferred range, and MFR of a resin composition is preferably from 1.0 to 5.0 g/ 10 minutes.

As is apparent from Example 1, Example 3, Example 4, Example 11 and Example 12, physical properties such as high-temperature creep characteristics and impact strength vary according to the mixing ratio of a polystyrene-based resin to a polyphenylene ether-based resin. When the amount of the polystyrene-based resin is less than 80 parts by mass as is the case in Example 1 based on 100 parts by mass of the polyphenylene ether-based resin, both high-temperature creep characteristics and impact strength are unchanged in the case of Example 3 (60 parts by mass), but the impact strength decreases while maintaining the values of high-temperature creep characteristics in the case of Example 11 (40 parts by mass). When the amount of the polystyrene-based resin is more than 80 parts by mass as is the case in Example 1 based on 100 parts by mass of the polyphenylene ether-based resin, the high-temperature creep characteristics slightly deteriorate in the case of Example 4 (110 parts by mass), although the impact strength increases. In Example 12 (130 parts by mass), the impact strength further increases and the high-temperature creep characteristics deteriorate. Thus, it is a ratio of mixing a polystyrene-based resin in an amount of 50 to 120 weight by mass based on 100 parts by mass of the polyphenylene ether-based resin that gives well-balanced physical properties such as high-temperature creep characteristics and impact strength required to a valve. As used herein, well-balanced physical properties such as high-temperature creep characteristics and impact strength mean that the high-temperature creep characteristics satisfy 600 hours or more and the impact strength satisfies 7.0 kJ/cm$^2$ or more. It is necessary that the high-temperature creep characteristics are 600 hours or more (or a pipe has a lifetime of about 5 years when an internal pressure is 0.6 MPa under an atmosphere at 95°C) and the impact strength is 7.0 kJ/cm$^2$ or more (suppressing crack due to deterioration of a pipe in long-term use, and having resistance to impact such as water hummer under a high pressure) so as to maintain performance of the valve for a long period.

As is apparent from a comparison between Example 1 and Example 5, the impact strength can be increased while maintaining the high-temperature creep characteristics by appropriately mixing a styrene-butadiene-based rubber. As is apparent from a comparison among Example 5 to Example 9, optimum conditions of the styrene-butadiene-based rubber are determined by the weight average molecular weight of styrene, styrene content and the amount of the styrene-butadiene-based rubber based on 100 parts by mass of the polyphenylene ether-based resin. Since the weight average molecular weight of styrene is as low as 100,000 in the styrene-butadiene-based rubber of Example 1, compared with 230,000 in the styrene-butadiene-based rubber of Example 5, the high-temperature creep characteristics declines in Example 6. Since the styrene content of Example 7 is as low as 5%, compared with 30% in Example 5, compatibility with the polyphenylene ether-based resin becomes inferior, and thus the high-temperature creep characteristics deteriorate and also the impact strength does not increase. Since the styrene content of Example 8 is as high as 50%, compatibility with the polyphenylene ether-based resin improves and the impact strength increases, but the high-temperature creep characteristics slightly deteriorates. When the amount of the styrene-butadiene-based rubber based on 100 parts by mass of the polyphenylene ether-based resin increases, the impact strength increases, but the high-temperature creep characteristics deteriorate, as is apparent by 13 parts by mass in Example 5 and 18 parts by mass in Example 9. Therefore, the impact strength can be increased while maintaining the high-temperature creep characteristics, by appropriately mixing 1 to 15 parts by mass of a styrene-butadiene-based rubber having a styrene content of 10 to 40% and a weight average molecular weight of 200,000. Furthermore, in use applications under high temperature and high pressure, the amount of the polystyrene-based resin to be mixed is more preferably from 50 to 105 parts by mass based on 100 parts by mass of the polyphenylene ether-based resin, and MFR after kneading is from 1.5 to 4.5 g/10 minutes.

As is apparent from Table 2, the mold shrinkage factor varies according to the amount of the polystyrene-based resin based on 100 parts by mass of the polyphenylene ether-based resin. The values of a mold shrinkage factor in Example 1, Example 3, Example 4 and Example 12 are within a range from 0.5 to 0.8%, and are also within a tolerance of a basic dimension. Among these, the mold shrinkage factor of Example 2 is almost close to the limit tolerance, so that Example 1, Example 3 and Example 4 are preferred, in which the compositions give molded articles whose quality are comparable to those made of a vinyl chloride resin, and allow the same die for the vinyl chloride resin to be used. It is possible to adjust the mold shrinkage factor to nearly within the same range as that of the vinyl chloride resin, if the amount of the polystyrene-based resin is within a range from 50 to 120 parts by mass based on 100 parts by mass of the polyphenylene ether-based resin.

As described above, a valve made of a polyphenylene ether-based resin composition of the present invention enables to obtain a satisfactory molded article which is excellent in balance between high-temperature creep characteristics and impact strength, and also enables to ensure fluidity upon molding. Therefore, the valve of the present invention can be used for a long period even if an acid or alkaline chemical solution is allowed to flow in a high temperature range (60 to 95°C), and also can be used at a temperature of about 100°C. It is also possible to increase the impact strength without deterioration of the high-temperature creep characteristics.

EFFECTS OF THE INVENTION

With the above constitution, a valve made of a polyphenylene ether-based resin composition of the present invention gives an operational advantage capable of obtaining a satisfactory molded article which is excellent in balance between high-temperature creep characteristics and impact strength, and also ensures fluidity upon molding. Thereby, it is possible to obtain an operational advantage capable of using the valve of the present invention for a long period even if an acid or alkaline chemical solution is allowed to flow in a high temperature range (60 to 95°C), using at a temperature of about 100°C, maintaining high sealing performance by suppressing deformation and bulge of a valve even when it is used in a high temperature range (60 to 95°C) or at a temperature as high as about 100°C under a high pressure, and increasing impact strength without deterioration of high-temperature creep characteristics by adding a styrene-butadiene-based rubber.

**Claims**

1.  A valve comprising a body, which has a fluid inlet port and a fluid outlet port, a flow path formed therein communicated with said fluid inlet port and said fluid outlet port, and a valve seat formed in said flow path; and a valve element, which is pressed on or separated from said valve seat by pivotal or vertical motion, thereby closing or opening said flow path, **characterised in that**
    at least said body is made of a polyphenylene ether-based resin composition containing a polyphenylene ether-based resin and a polystyrene-based resin as essential components, wherein the polyphenylene ether-based resin composition contains 50 to 120 parts by mass of a pelystyrene-based resin based on 100 parts by mass of a polyphenylene ether-based resin, and has a melt flow rate of 1.0 to 5.0 g/10 minutes after kneading.

2.  The valve according to claim 1, wherein the polyphenylene ether-based resin composition has a tensile strength of 20 MPa or more and a tensile elastic modulus of 1,000 MPa or more under an atmosphere at 95°C.

3.  The valve according to claim 2, wherein a notched Izod impact strength of the polyphenylene ether-based resin composition is 7.0 kJ/m$^2$ or more under an atmosphere at 23°C.

4.  The valve according to any one of claims 1 to 3, wherein a linear expansion coefficient of the polyphenylene ether-based resin composition is from $50 \times 10^{-5}$/°C to $8.0 \times 10^{-5}$ /°C.

5.  The valve according to any one of claims 1 to 4, wherein water does not leak from the valve when the valve is retained for 1 minute in a state where a water pressure of 5.0 MPa is applied by fully opening the valve under an atmosphere at 95°C.

**6.** The valve according to any one of claims 1 to 5, wherein a mold shrinkage factor of the polyphenylene ether-based resin composition is from 0.5 to 0.8%.

**7.** The valve according to claim 1, which further contains 1 to 15 parts by mass of a styrene-butadiene-based rubber having a styrene content of 10 to 40% and a weight average molecular weight of 200,000 or more, based on 100 parts by mass of the polyphenylene ether-based resin.

**8.** The valve according to claims 1 to 7, wherein the valve is any of diaphragm valve, ball valve, cock, butterfly valve, gate valve, stop valve, needle valve, pinch valve and check valve.

**Patentansprüche**

**1.** Ventil umfassend einen Körper, der einen Fluideinlassport und einen Fluidauslassport aufweist, einen darin ausgebildeten Strömungsweg, der mit dem Fluideinlassport und dem Fluidauslassport in Verbindung steht, und einen Ventilsitz, der in dem Strömungsweg ausgebildet ist, und ein Ventilelement, das durch eine Drehbewegung oder vertikale Bewegung auf den Ventilsitz aufgedrückt oder davon getrennt wird, wodurch der Strömungsweg geöffnet oder geschlossen wird,
dadurch gekenntzeichnet, dass
mindestens der Körper aus einer Harzzusammensetzung auf Basis von Polyphenylenether gebildet ist, die ein Harz auf Polyphenylenetherbasis und ein Harz auf Polystyrolbasis als wesentliche Bestandteile enthält, wobei die Harzzusammensetzung auf Basis von Polyphenylenether 50 bis 120 Massenteile eines Harzes auf Polystyrolbasis bezogen auf 100 Massenteile eines Harzes auf Polyphenylenetherbasis enthält, und nach Verkneten eine Schmelzfließrate (MFR, Melt Flow Rate) von 1,0 bis 5,0 g/10 Minuten aufweist.

**2.** Ventil nach Anspruch 1, wobei die Harzzusammensetzung auf Basis von Polyphenylenether unter einer Atmosphäre bei 95 °C eine Zugfestigkeit von 20 MPa oder mehr und einen Zugelastizitätmodul von 1.000 MPa oder mehr aufweist.

**3.** Ventil nach Anspruch 2, wobei eine Kerbschlagfestigkeit nach Izod der Harzzusammensetzung auf Basis von Polyphenylenether unter einer Atmosphäre bei 23 °C 7,0 kJ/m$^2$ oder mehr beträgt.

**4.** Ventil nach einem der Ansprüche 1 bis 3, wobei ein Linearexpansionskoeffizient der Harzzusammensetzung auf Basis von Polyphenylenether von 5,0 x 10$^{-5}$/°C bis 8,0 x 10$^{-5}$/°C beträgt.

**5.** Ventil nach einem der Ansprüche 1 bis 4, wobei aus dem Ventil kein Wasser austritt, wenn das Ventil 1 Minute lang in einem Zustand gehalten wird, bei dem durch vollständiges Öffnen des Ventils unter einer Atmosphäre bei 95 °C ein Wasserdruck von 5,0 MPa einwirkt.

**6.** Ventil nach einem der Ansprüche 1 bis 5, wobei ein Formschrumpffaktor der Harzzusammensetzung auf Basis von Polyphenylenether von 0,5 bis 0,8 % beträgt.

**7.** Ventil nach Anspruch 1, das weiter 1 bis 15 Massenteile eines Kautschuks auf Basis von Styrol-Butadien enthält, der einen Styrolgehalt von 10 bis 40 % und ein mittleres Molekulargewicht von 200.000 oder mehr, bezogen auf 100 Massenteile des Harzes auf Polyphenylenetherbasis aufweist.

**8.** Ventil nach einem der Ansprüche 1 bis 7, wobei das Ventil beliebig ausgewählt ist aus einem Membranventil, Kugelventil, Hahn, Butterfly-Ventil, Absperrventil, Stoppventil, Nadelventil, Quetschventil und Rückschlagventil.

**Revendications**

**1.** Vanne comprenant un corps muni d'un orifice d'entrée de fluide et d'un orifice de sortie de fluide, d'un passage d'écoulement formé à l'intérieur communiquant avec l'orifice d'entrée de fluide et l'orifice de sortie de fluide, et d'un siège de vanne formé dans le passage d'écoulement ; et un élément de vanne qui est appuyé contre ou séparé du siège de vanne en effectuant un mouvement vertical ou de pivotement, fermant ou ouvrant ainsi le passage d'écoulement, **caractérisée en ce qu'**au moins le corps est constitué d'une composition de résine à base de polyphénylène éther contenant une résine à base de polyphénylène éther et une résine à base de polystyrène comme composants essentiels, sachant que la composition de résine à base de polyphénylène éther contient 50 à 120 parts en masse d'une résine à base de polystyrène sur la base de 100 parties en masse d'une résine à base de polyphénylène éther, et présente un indice de fluidité à chaud de 1,0 à 5,0 g/10 minutes après malaxage.

2. Vanne selon la revendication 1, sachant que la composition de résine à base de polyphénylène éther présente une résistance à la traction de 20 MPa ou plus et un module d'élasticité en traction de 1 000 MPa ou plus sous une atmosphère à 95 °C.

3. Vanne selon la revendication 2, sachant que la résistance au choc Izod entaillé de la composition de résine à base de polyphénylène éther est de 7,0 kj/m$^l$ ou plus sous une atmosphère à 23 °C.

4. Vanne selon l'une des revendications 1 à 3, sachant qu'un coefficient d'expansion linéaire de la composition de résine à base de polyphénylène éther est compris entre 5,0 x 10$^{-5}$/ °C et 8,0 x 10$^{-5}$/ °C.

5. Vanne selon l'une des revendications 1 à 4, sachant que l'eau ne fuit pas de la vanne lorsque la vanne est retenue pendant 1 minute dans un état où une pression de l'eau de 5,0 MPa est appliquée par une ouverture complète de la vanne sous une atmosphère à 95 °C.

6. Vanne selon l'une des revendications 1 à 5, sachant qu'un facteur de retrait au moulage de la composition de résine à base de polyphénylène éther est compris entre 0,5 et 0,8 %.

7. Vanne selon la revendication 1, comprenant en outre 1 à 15 parties en masse de caoutchouc à base de styrène-butadiène constitué de 10 à 40 % de styrène et présentant une masse moléculaire moyenne en poids de 200 000 ou plus, basée sur 100 parties en masse de la résine à base de polyphénylène éther.

8. Vanne selon les revendications 1 à 7, sachant que la vanne peut être une vanne à membrane, une vanne sphérique, un robinet, une vanne papillon, une vanne principale, une vanne d'arrêt, une vanne à pointeau, une vanne à manchon ou une vanne de retenue.

# Fig.1

Fig. 1

1:     Valve body

2:     Flow path

3:     Partition wall

4:     Valve seat surface

5:     Bonnet

6:     Sleeve

7:     Spindle

8:     Compressor

9:     Diaphragm

10:    Handle

11:    Fluid inlet port

12:    Fluid outlet port

D:     Outer diameter of flange portion

W:     Face-to-face distance

**EP 2 163 798 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8152073 A
- US 20070108056 A1
- US 4777977 A
- JP 11181195 A
- EP 0129762 A2